# EUROPEAN PATENT APPLICATION

(11) **EP 1 370 015 A2**
(43) Date of publication of application: **10.12.2003**
(21) Application number: 03010829.4
(22) Date of filing: 14.05.2003
(51) Int. Cl.: H04B 10/155

(54) **Optical signal generator and method thereof**

(30) Priority: 07.06.2002 JP 2002166501
(71) Applicant: KDDI Submarine Cable Systems Inc., Tokyo (JP); MITSUBISHI DENKI KABUSHIKI KAISHA, Tokyo (JP)
(72) Inventor: Yuichi, Yamada, Shinjuku-ku, Tokyo (JP); Inoue, Takanori, Shinjuku-ku, Tokyo (JP); Yamauchi, Hiroshi, Shinjuku-ku, Tokyo (JP); Shibano, Eiichi, Shinjuku-ku, Tokyo (JP); Nakagawa, Shinichi, Shinjuku-ku, Tokyo (JP); Taga, Hidenori, Shinjuku-ku, Tokyo (JP)
(74) Representative: Schaumburg, Thoenes & Thurn

(57) **Abstract**

An optical signal generator comprises a light source to generate an optical carrier, a data modulator to modulate the optical carrier output from the light source with a transmission data, an optical phase modulator to modulate an optical phase of an output light from the data modulator in synchronization with the output light from the data modulator so as to emphasize one of sidebands, and an optical filter to remove harmonic components located outside the emphasized sideband out of an output light from the optical phase modulator.

## Description

### FIELD OF THE INVENTION

This invention generally relates to an optical signal generator and method thereof and more specifically relates to an optical signal generator and method thereof to generate a vestigial sideband (VSB) modulated optical signal.

### BACKGROUND OF THE INVENTION

With the advance of wavelength division multiplexing transmission technology, a transmission capacity of an optical fiber has been increasing. However, in a general optical modulation system (both-sideband (BSB) modulation), the number of optical signal wavelengths to be crammed in a limited band space is limited. As a method to make wavelength intervals narrower, systems to use single sideband (SSB) modulation and vestigial sideband (VSB) modulation have been studied (e.g. "LiNbO3 Optical Single-Sideband Modulator", Electronics OFC2000PD16, and "10 Gbit/s optical signal sideband system", Electronics Letters vol. 33, No. 11, pp. 970-973, 22^{nd} May 1977).

As typical methods to generate a VSB or SSB optical signal, there is a method to emphasize one of sidebands using phase modulation (hereinafter, referred as a phase modulation method) and a method to remove unnecessary band components with an optical filter (e.g. an interleaver) (hereinafter, referred as an optical filter method).

In the phase modulation method, when one of sidebands is emphasized through phase modulation, harmonic components located outside the sideband are also emphasized. As a result, crosstalk between adjacent wavelengths increases causing deterioration of the transmission characteristics.

In the optical filter method, since signal components are removed by an optical filter, an optical pulse width in the time domain becomes wider. Accordingly, it is difficult to increase a bit rate.

### SUMMARY OF THE INVENTION

An object of the invention is to provide an optical signal generator and method thereof to generate an optical signal with little crosstalk between adjacent wavelengths and an optical pulse width which does not expand.

An optical signal generator according to the invention comprises a light source to generate an optical carrier, a data modulator to modulate the optical carrier output from the light source with a transmission data, an optical phase modulator to modulate an optical phase of an output light from the data modulator in synchronization with the output light from the data modulator so as to emphasize one of sidebands, and an optical filter to remove harmonic components located outside the emphasized sideband out of an output light from the optical phase modulator.

An optical signal generating method according to the invention comprises steps of generating a data modulated light by modulating an optical carrier with a transmission data, emphasizing one of sidebands by modulating an optical phase of the data modulated light, and removing harmonic components located outside the emphasized sideband.

### BRIEF DESCRIPTION OF THE DRAWINGS

The above and other objects, features and advantages of the present invention will be apparent from the following detailed description of embodiments of the invention in conjunction with the accompanying drawings, in which:
Fig. 1 shows a schematic block diagram of an embodiment according to the invention;
Fig. 2 shows waveforms in conventional phase modulation;
Fig. 3 shows waveforms in phase modulation according to the embodiment;
Fig. 4 shows a BSB spectrum example;
Fig. 5 shows a VSB spectrum example according to the embodiment;
Fig. 6 shows a spectrum example of a phase difference 0 (prior art);
Fig. 7 shows a spectrum example of phase difference -π/4;
Fig. 8 shows a spectrum example of phase difference -π/2;
Fig. 9 shows a spectrum example of phase difference -3π/4;
Fig. 10 shows a spectrum example of phase difference -π (prior art);
Fig. 11 shows a measured example of Q value penalty for phase differences;
Fig. 12 shows a spectrum example of an output light from a data modulator 16;
Fig. 13 shows a spectrum example of an output light from a phase modulator 18; and
Fig. 14 shows a spectrum example of an output light from an optical filter 24.

### DETAILED DESCRIPTION

Embodiments of the invention are explained below in detail with reference to the drawings.

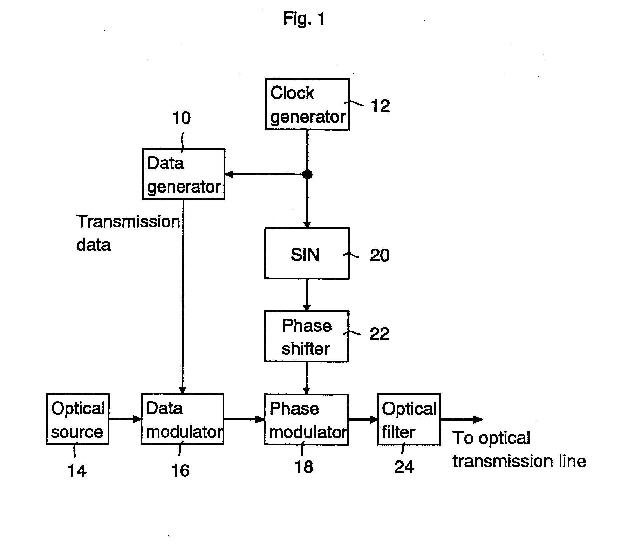

Fig. 1 shows a schematic block diagram of an embodiment according to the invention. A data generator 10 generates a transmission data having pulses of 50% duty ratio according to a clock output from a clock generator 12. A light source 14 generates a laser light to become an optical carrier for carrying the transmission data output from the data generator 10 and applies the laser light to a data modulator 16. The data modulator 16 intensity-modulates the laser light from the light source 14 with the transmission data from the data generator 10 to generate an optical signal of RZ optical pulse train for carrying the transmission data. The generated optical pulse train is applied to a phase modulator 18.

On the other hand, a sine wave generator 20, according to the clock output from the clock generator 12, generates a sine wave signal synchronizing with the clock and having a frequency identical with a frequency of the clock. A phase shifter 22 shifts a phase of the sine wave signal output from the sine wave generator 20 by π/2 and applies the sine wave signal to the phase modulator 16.

The phase modulator 18 modulates an optical phase of each optical pulse in the optical pulse train from the data modulator 16 with the sine wave signal from the phase shifter 22. The phase-modulated optical pulse train is sent into an optical fiber transmission line through an optical filter 24 which removes harmonic components emphasized by the phase modulator 18.

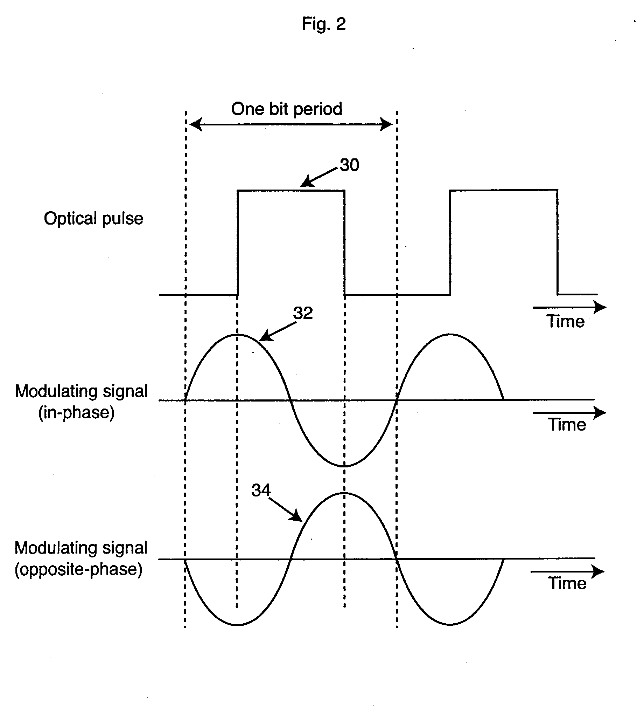

Generally, phase modulation has been applied to a signal light beforehand in order to suppress self phase modulation due to a nonlinear effect of an optical fiber. In this case, as shown in Fig. 2, a phase relation between an optical pulse and a modulating signal for phase modulation is that a sine wave signal reaches one extreme value at the rise timing of the optical pulse and reaches the other extreme value at the fall timing of the optical pulse. In other words, the phase relation is such that the polarity of the modulating signal changes in the center part of the optical pulse. Assuming that an optical pulse exists in the center of one bit period, a modulating signal (a driving signal of a phase modulator) is in-phase (a phase difference 0) or opposite-phase (a phase difference π) . In Fig. 2, reference numeral 30 denotes an optical pulse to be phase-modulated, 32 denotes an in-phase modulating signal, and 34 denotes an opposite-phase modulating signal respectively.

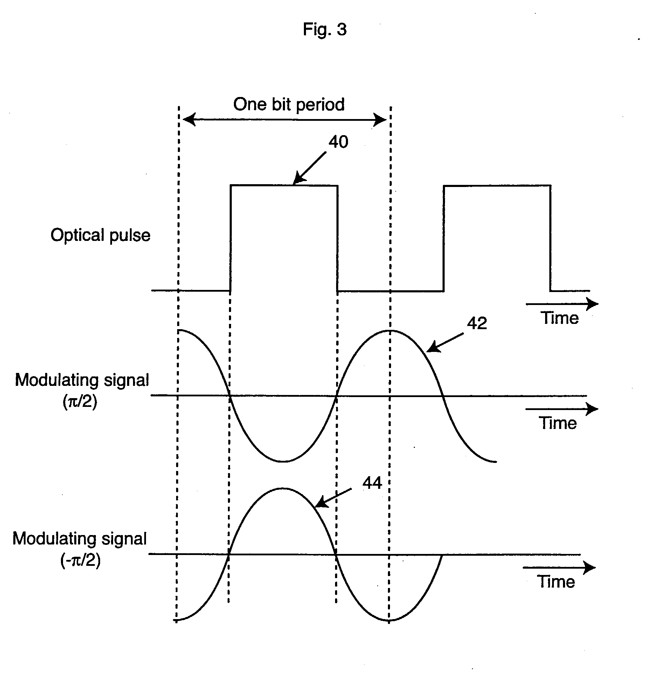

In the embodiment, on the contrary, a phase shifter 22 shifts a phase of the sine wave signal by +π/2 or -π/2 before applying the sine wave signal as a modulating signal (a driving signal) to the phase modulator 18. Fig. 3 shows a waveform timing chart in the phase modulator 18 according to the embodiment. Reference numeral 40 denotes an optical pulse applied to the phase modulator 18 from the data modulator 16, 42 denotes a modulating signal (a driving signal) with phase shifting amount π/2 applied to the phase modulator 18 from the phase shifter 22, and 44 denotes a modulating signal (a driving signal) with phase shifting amount -π/2 applied to the phase modulator 18 from the phase shifter 22 respectively. Although the phase shifting amount in the phase shifter 22 is described as π/2 or -π/2, for explanatory convenience, this amount is practically the phase difference between the optical pulse and the modulating signal in the phase modulator 18.

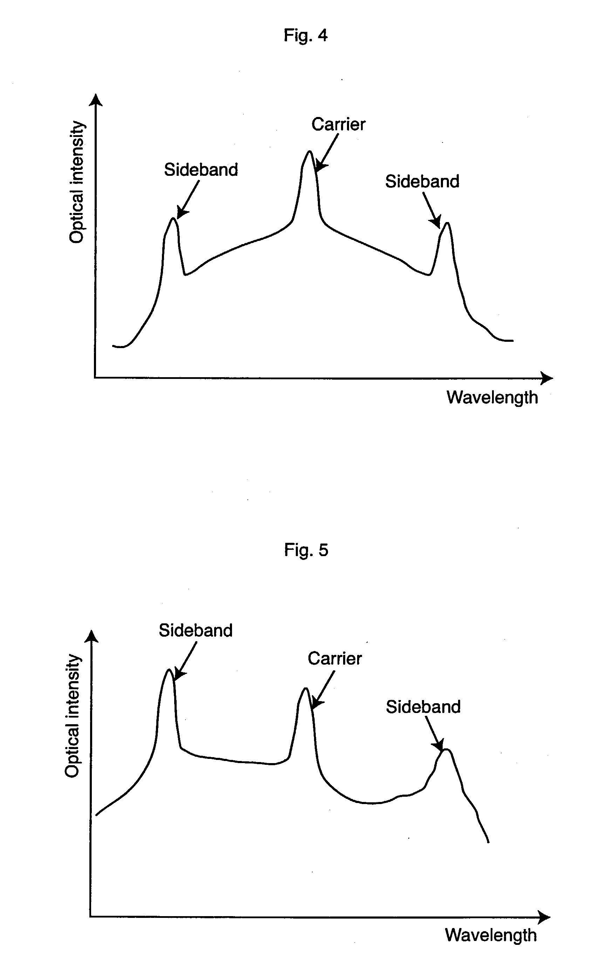

When a phase of phase modulation is intentionally shifted as performed in the embodiment, one of the two signal sidebands generated through data modulation (intensity modulation) at the data modulator 16 is emphasized and the other is suppressed. Fig. 5 shows a spectrum obtained by applying the embodiment to an optical pulse having a spectrum shown in Fig. 4. Obviously from Fig. 5, one sideband is emphasized and the other is suppressed.

Because of the phase shifting in phase modulation, the effect for negating the self phase modulation due to the nonlinear effect of optical fiber decreases and thus transmission characteristics deteriorate due to the interaction with chromatic dispersion. A solution for overcoming the deterioration of transmission characteristics, for example, is to employ a method to decrease the accumulated chromatic dispersion by cutting down the transmission distance or/and a method to decrease the accumulated chromatic. dispersion by utilizing a fiber (a dispersion management fiber) with a combination for flattening a dispersion slope. When the latter method is employed, this embodiment is applicable to long haul transmission as well.

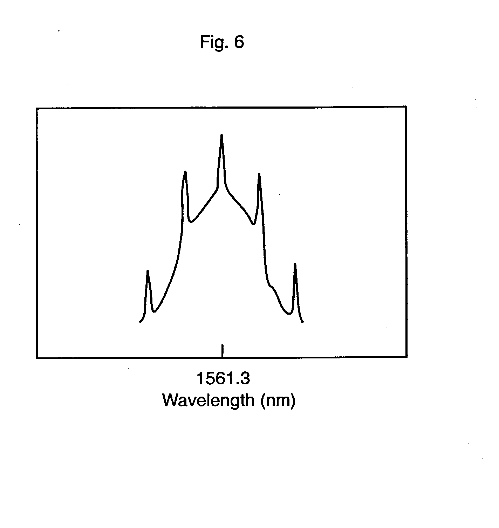

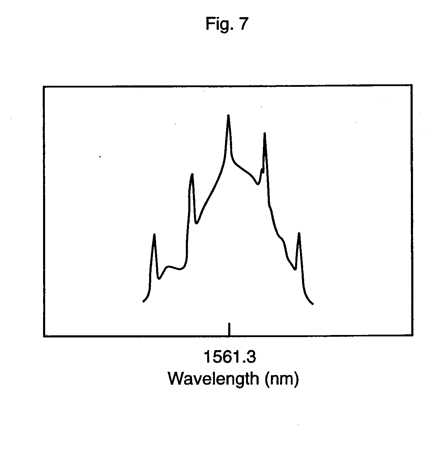

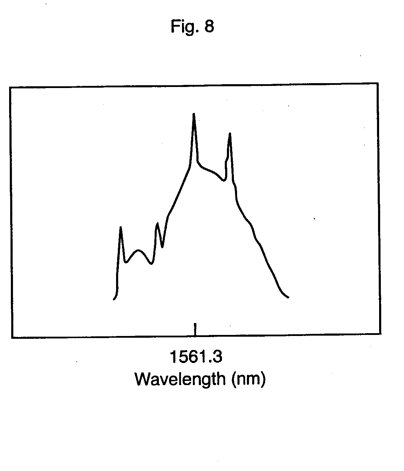

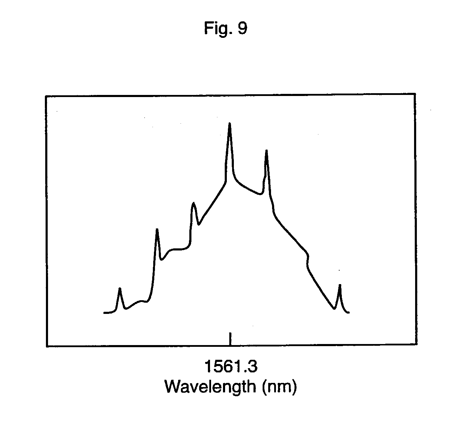

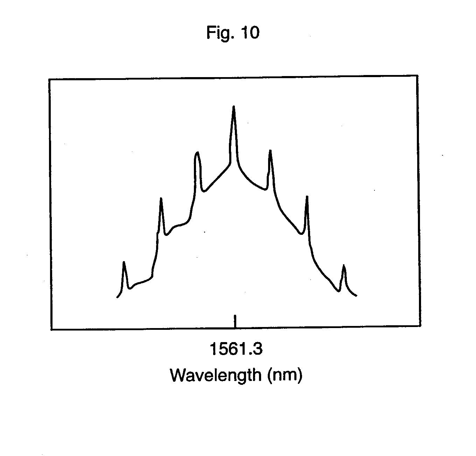

The effect that a phase shifting amount in the phase shifter 22, more specifically a phase difference between the optical pulse and the modulating signal in the phase modulator 18 gives to sidebands is studied. Fig. 6 shows a spectrum diagram of phase difference 0 (prior art), Fig. 7 shows a spectrum diagram of phase difference -π/4, Fig. 8 shows a spectrum diagram of phase difference -π/2, Fig. 9 shows a spectrum diagram of phase difference -3π/4, and Fig. 10 shows a spectrum diagram of phase difference -π (prior art) respectively. As obviously from Figs. 6 to 10, when the phase difference is set to π/2 or -π/2, one of sidebands is most suppressed, and when the phase difference is set to within a range of π/2-π/4 to π/2+π/4, or -π/2-π/4 to -π/2+π/4, a satisfactory suppression effect for the sidebands is obtained.

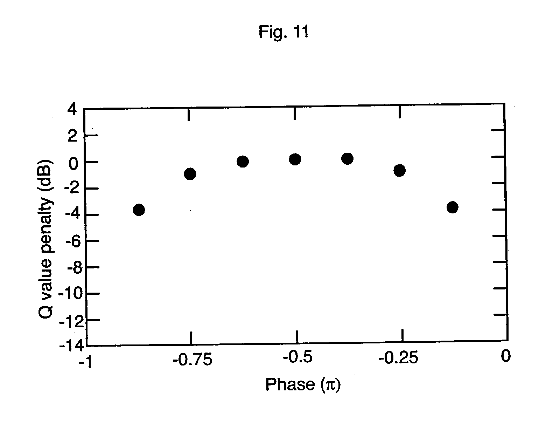

The effect that the phase difference in the phase modulator 18 gives to the transmission characteristics using, for example, a WDM signal with a wavelength interval 0.15 nm is measured. The result is shown in Fig. 11. The horizontal axis shows the phase difference in the phase modulator 18, and the vertical axis shows a penalty for the Q value at the phase difference -π/2. With the wavelength interval 0.15 nm, if the phase difference is set to 0 or π, it is impossible to measure the Q value because overlapping of wavelengths with next wavelengths reaches to the point not to be negligible. As understandable from Fig. 11, although it is most preferable to set the phase difference between the optical pulse and the modulating signal to π/2 or -π/2, even it is set to within a range of π/2-π/4 to π/2+π/4 or -π/2-π/4 to -π/2+π/4, a satisfactory Q value is obtained.

Even though a duty ratio of an optical pulse is not 50%, by setting a phase difference between an optical pulse and a modulating signal in the phase modulator 18 to the above numerical value, satisfactory VSB modulation is obtained. Also, it is more effective for VSB modulation, if a waveform of the modulating signal is distorted so that the modulating signal level becomes 0 simultaneously with the rise timing and fall timing of the optical pulse and the modulating signal has a value of one polarity alone within a period of the optical pulse. Such waveform distortion of a modulating signal is easily performed by controlling input/output characteristics of an amplifier.

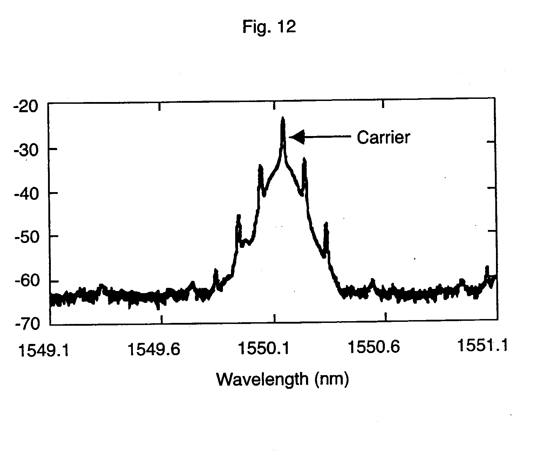

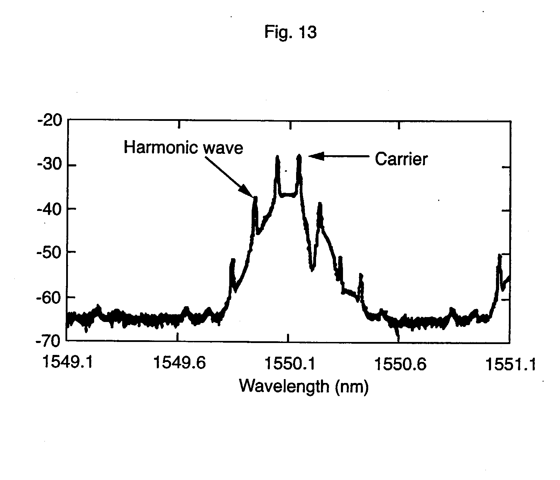

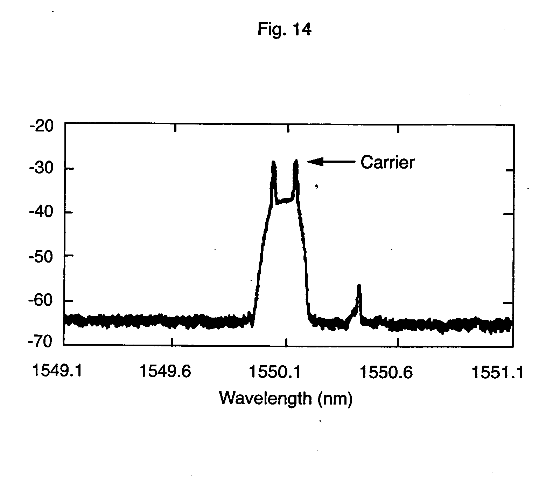

Furthermore, in the embodiment, the optical filter 24 removes harmonic components located outside the sideband emphasized by the phase modulator 18. Fig. 12 shows a spectrum of an output light from the data modulator 16, Fig. 13 shows a spectrum of an output light from the phase modulator 18, and Fig. 14 shows a spectrum of an output light from the optical filter 24. Although the optical filter 24 can comprise an optical filter to remove the harmonic components outside the sideband emphasized by the phase modulator 18 as described above, it also can be an optical bandpass filter to transmit exclusively the carrier and sideband emphasized by the phase modulator 18. Fig. 14 shows a spectrum of the latter case.

As readily understandable from the aforementioned explanation, according to the invention, VSB modulated signal lights having satisfactory transmission characteristics are generated with a very simple configuration.

## Claims

1. An optical signal generator comprising:
a light source (14) to generate an optical carrier,
a data modulator (16) to modulate the optical carrier output from the light source with a transmission data;
an optical phase modulator (18, 20, 22) to modulate an optical phase of an output light from the data modulator (16) in synchronization with the output light from the data modulator so as to emphasize one of sidebands; and
an optical filter (24) to remove harmonic components located outside the emphasized sideband out of an output light from the optical phase modulator.

2. The optical signal generator of claim 1 wherein the optical phase modulator comprises
a modulating signal generator (20, 22) to generate a modulating signal synchronized with the transmission data and shifted by a predetermined phase amount; and
a phase modulator (18) to modulate an optical phase of an optical pulse input from the data modulator with the modulating signal from the modulating signal generator; and wherein
when the optical pulse is located in the center of one bit period, a phase difference of the modulating signal for the one bit period in the phase modulator stays within a range of π/4 to 3π/4 and -π/4 to -3π/4.

3. The optical signal generator of claim 2 wherein a phase difference of the modulating signal for the one bit period in the optical phase modulator (18, 20, 22) becomes practically either π/2 or -π/2.

4. The optical signal generator of claim 1 wherein the optical filter comprises an optical bandpass filter (24) to transmit exclusively the carrier and the emphasized sideband in the output light from the optical phase modulator.

5. An optical signal generating method comprising steps of:
generating a data modulated light by modulating an optical carrier with a transmission data;
emphasizing one of sidebands by modulating an optical phase of the data modulated light; and
removing harmonic components located outside the sideband.

6. The optical signal generating method of claim 5 wherein removing the harmonic components located outside the sideband comprises extracting the carrier and the sideband out of the phase-modulated signal light.
